# EUROPEAN PATENT SPECIFICATION

(11) **EP 0 723 088 B1**
(45) Date of publication and mention of the grant of the patent: **23.04.2003**
(21) Application number: 96830016.0
(22) Date of filing: 17.01.1996
(51) Int. Cl.: F16C 27/08, F16C 35/077, F16C 27/04

(54) **A support device for rotating shaft rolling bearings on a fixed supporting structure**
Haltevorrichtung für Wälzlager einer rotierenden Welle auf einer festen Trägerstruktur
Support sur une structure fixe de paliers à contact de roulement pour arbre rotatif

(30) Priority: 17.01.1995 IT BO950011
(43) Date of publication of application: 24.07.1996
(73) Proprietor: SCM GROUP S.p.A., 47900 Rimini (IT)
(72) Inventor: Scattolari, Paolo, I-47049 Viserba di Rimini (Rimini) (IT)
(74) Representative: Lanzoni, Luciano

(56) References cited:
- CH-A- 624 328
- DE-C- 859 547
- FR-A- 1 049 310

## Description

The present invention relates to a machine tool comprising inter alia a rotating shaft (2), rolling bearings (1) and a fixed supporting structure which is particularly suitable for high precision applications in which the shaft rotates at a high speed.

In some sectors of mechanics, for example the construction of machine tools, the rotating shafts on the respective supporting structures are supported using conventional rolling bearings positioned and fitted on the shaft in accordance with typical assembly schemes.

One typical scheme envisages the attachment of the shaft to two end supports, one having a fixing function and the other acting as a carriage, positioned so that the shaft can slide freely in the direction of its axis, and designed to prevent thermal shock due to the difference in axial expansion between the shaft and the supporting structure. In terms of construction, such a scheme may be implemented, for example, by positioning two bearings, side-by-side, at one of the said supports, the bearings fitted on the shaft so that they are axially locked; in contrast, a bearing fitted on the shaft so that the former is radially rigid yet axially mobile is fitted on the other support.

On shafts which rotate at a high speed, slipping occurs when the radial rigidity of the support is very high. This guarantees the adequate precision of the rotation, and limits the extent of the oscillations which, if the support has a high compliance, would cause the shaft to reach its critical speed at low rpm.

A high degree of radial rigidity has, until now, been obtained by the direct connection of the bearing outer ring and the bearing seat.

In such cases, the possibility of axial rolling is guaranteed by a suitable choice of connection tolerances.

However, the said possibility to move allows undesired rotation of the bearing on the seat, which causes wear on the connected parts, oxidation and corrosion, which gradually compromise the efficiency of the initial connection.

To overcome the afore-mentioned disadvantages, in some cases bearing support bushings are used, having bearings which allow them to run axially on the supporting structure.

However, such a solution requires precision bushings, as well as limited bearing size tolerances. In fact, great care must be taken when selecting the diameter of the bearings, since differences in size cause some to bear greater loads than others.

Finally, the said solution involves relatively high costs, which are justified only in the case of particular applications.

DE-C-859 547 discloses an arrangment for rolling bearings in which the bearing are held in one or more thin plates substantially perpedicular to a shaft, the plates are provided with tongues externally protruding which form a seat in which the bearing is held by friction.

The aim of the present invention is to overcome the afore-mentioned problem of combining high radial rigidity with the possibility of axial rolling in bearing assemblies, at the same time avoiding slipping.

According to the invention this is achieved by the features of claim 1. Preferred embodiments are defined in the dependent claims.

The basic advantages obtained using the present invention consist essentially in the significant simplification of the production of the support device, allowing a notable reduction in the costs.

The present invention also allows the production of support device in which only the desired shaft connection conditions are present, without any further, undesired movements.

Moreover, the present invention is distinguished by a high degree of reliability and, in general, the intrinsic possibility of maintaining the initial bearing fitting conditions constant and unchanged with the passage of time.

Further advantages of the present invention are more clearly described in the detailed description below, with reference to the accompanying drawings, which illustrate an embodiment by way of example only, and in which:
- figure 1 is a plan view of the disclosed support device for rolling bearings on rotating shafts;
- figure 2 is an assembly drawing of the device, showing the cross-section along line II - II of fig. 1 and with the support unit in its pretightening configuration;
- figure 3 is a plan view of a support for the plates which is part of the device disclosed;
- figure 4 is a cross-section of the support shown in fig. 3, along the line IV - IV;
- figure 5 is a plan view of a bearing support which is part of the device disclosed;
- figure 6 is a cross-section of the support shown in fig. 5, along the line VI - VI;
- figures 7 and 8 are, respectively, a plan view and side view of a possible embodiment of the plates which are part of the device disclosed;
- figure 9 is a static functional diagram of the device disclosed.

With reference to accompanying drawings 1 and 2, it is evident that the invention consists essentially of a support device 14 for rolling bearings 1 fitted on rotating shafts 2 on a fixed supporting structure 3.

The bearing 1 is keyed to a pin 15 at the end of the shaft 2 in such a way that the bearing's internal ring 18 makes contact on one side with a projection 16 on the shaft 2, and on the other side with a second ring nut 17, screwed onto the pin 15.

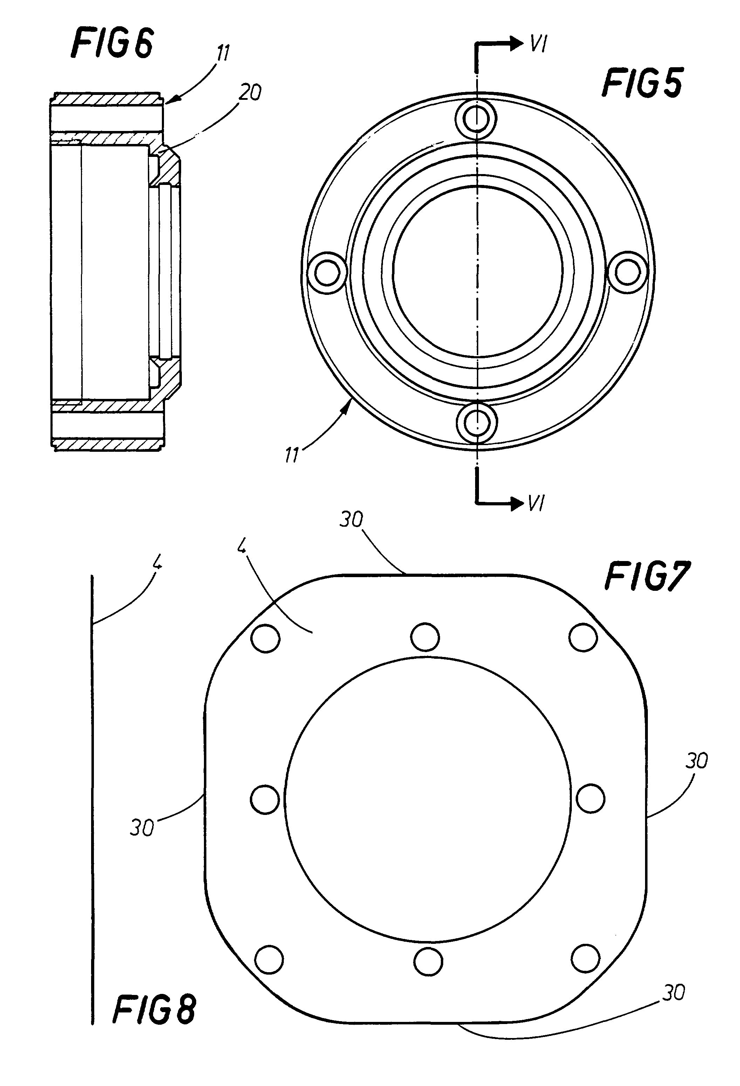

The bearing 1 is housed on a first support 11 (see figures 5 and 6), to which it is coaxially and rigidly connected at its external ring 19.

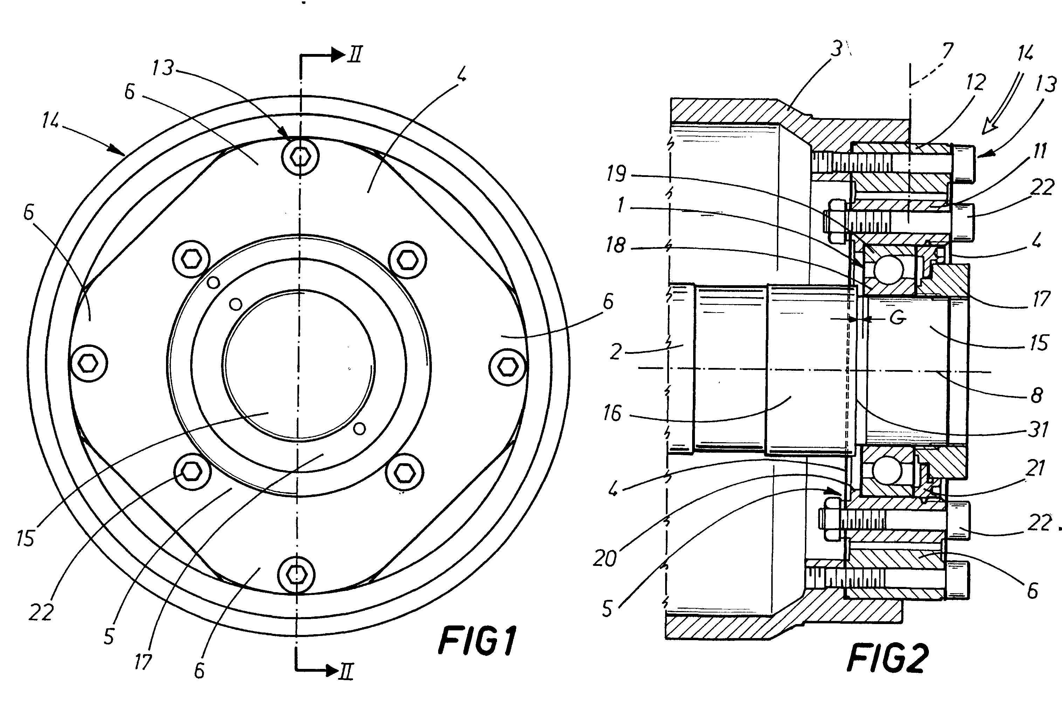

In fact, as shown in figures 1 and 5, the external ring 19 of the bearing 1 makes contact, on one side, with one edge 20 of the first support 11, and on the other, with a first ring nut 21 screwed onto the support 11.

The device 14 includes two thin plates 4, flexible in a direction perpendicular to their plane (see figures 7 and 8), made of harmonic steel, in a symmetrical quadrilateral ring shape.

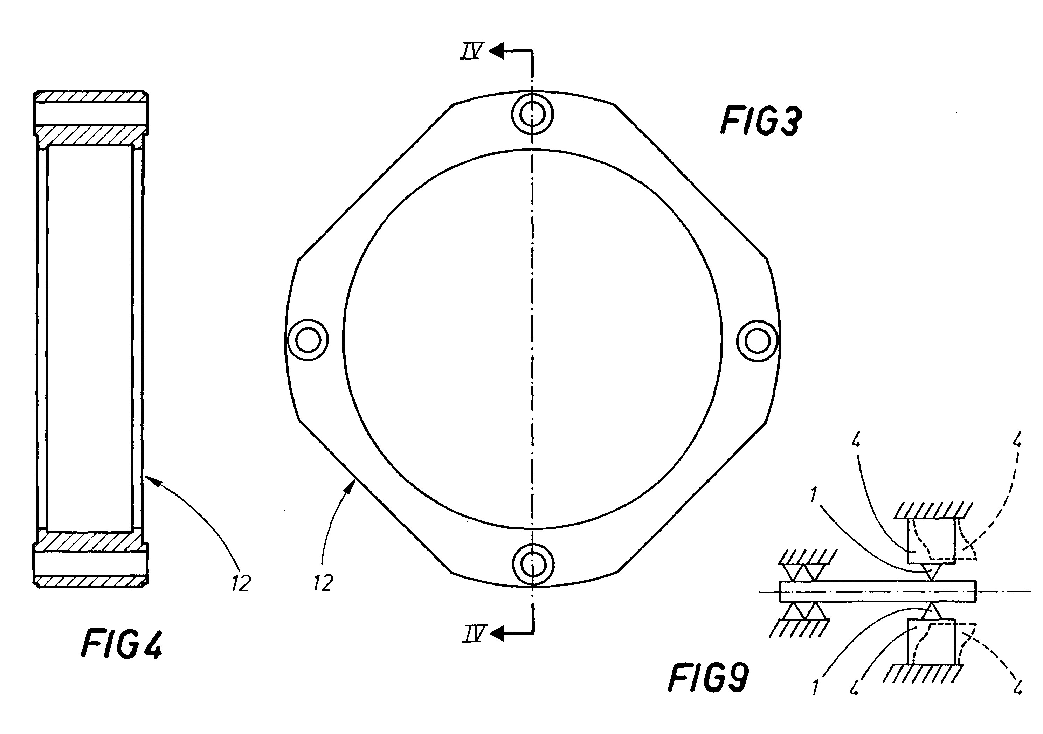

The plates 4 are set side-by-side and supported by a ring-shaped second support 12 (see figures 3 and 4), positioned centrally relative to the plates 4 and which may be connected to the supporting structure 3 using tightening means 13.

As can be seen in figure 1, the tightening means 13 serve not only to fix the second support 12 of plates 4 to the supporting structure 3, but also to secure the plates 4 at their external edges 6, so that they are secured to the second support 12.

The first bearing 1 support 11 is, in turn, fitted between the plates 4, rigidly attached at their internal edges 5 using the relative bolts 22.

Finally, the plates 4 are fitted between the bearing 1 and the supporting structure 3, connecting them at the internal and external edges 5 and 6 of the plates 4. The bearing 1 is, therefore, rigidly supported on the supporting structure 3 in a direction 7 radial to the shaft 2, whilst it oscillates freely in a direction 8 axial to the shaft 2, along which the compliance of the plates 4 is evident.

To better understand the afore-mentioned concept, figure 9 shows that the device 14 has a static assembly diagram which illustrates a double portal (represented by the plates 4) attached to a rigid crosspiece, represented by the bearing 1.

The embodiment illustrated, following the tightening of the external bolts 22 to fix the unit to the supporting structure 3, leaves a play, indicated by G in figure 2, between the internal ring 19 of the bearing 1 and the projection 16 on the shaft 2 (equal to approx. 0.6 mm). During fitting of the entire unit, when the first internal ring nut 21 is tightened on the relative threaded pin 15 of the shaft 2, the said play G is compensated by the flexible deformation of the two plates 4, with a resulting axial preload on the bearing 1 equal to the force necessary for the deformation of the plates.

The present invention, thus designed for the said objects, may be subject to numerous variations, all encompassed by the original design concept, and all components may be replaced with technically equivalent parts.

Practical modifications and/or improvements are possible, all encompassed by the following claims.

## Claims

1. A machine tool comprising a support device, a rotating shaft (2), rolling bearings (1) and a fixed supporting structure (3), said support device including at least two flexible plates (4), set side-by-side, fitted between the bearing (1) and said supporting structure (3), connecting them at the internal and external edges (5, 6) of the said plates (4), the plates (4) being rigidly fixed at least at their internal edges (5), so as to support the bearing (1) rigidly on the supporting structure (3) in a direction (7) radial to the shaft (2) and yieldingly in a direction (8) axial to the shaft (2), so that the bearing (1) can move freely in the axial direction with respect to the supporting structure (3), the bearing (1) being keyed on the shaft (2) by means of a threaded ring nut (17), whereby during fitting, when the plates (4) support no axial load, a play (G) is envisaged between the internal ring (18) of the bearing (1) and a projection (16) forming a shoulder on the shaft (2) and following tightening, that is to say, when the ring nut (17) has been screwed onto a threaded pin (15) of the shaft (2), the said play (G) is compensated by flexible deformation of the two plates (4) with a resulting axial preload on the bearing (1) equal to the force necessary for the deformation of the plates (4).

2. The device as described in claim 1, **characterised in that** it includes a first support (11) which is positioned between the plates (4) and connected to their internal edges (5).

3. The device as described in claim 1, **characterised in that** it includes a second support (12) for the plates (4), which may be attached to the supporting structure (3) in such a way that it rigidly attaches the plates (4) to the supporting structure (3) at their external edges (6).

4. The device as described in claim 1, **characterised in that** the plates (4) are made of harmonic steel.

5. The device as described in claim 1, **characterised in that** it includes a plurality of plates (4), said plates being positioned side-by-side.

6. The device as described in claim 3, **characterised in that** the second support (12) for the plates (4) includes single tightening means (13) for the attachment of the said second support (12) to the second support (12) to the supporting structure (3) and attachment of the plates (4) to the second support (12).

7. The device as described in claim 4, **characterised in that** the plates (4) are symmetrical.

8. The device as described in claim 2, **characterised in that** said bearing (1) is housed on said first support (11), being coaxially and rigidly connected to said support at its external ring (19), said external ring (19) making contact on one side with one edge (20) of the first support (11), and on the other side with a further threaded ring nut (21).

## Patentansprüche

1. Werkzeugmaschine, enthaltend eine Haltevorrichtung, eine rotierende Welle (2), Wälzlager (1) und eine feste Trägerstruktur (3), wobei die genannte Haltevorrichtung wenigstens zwei flexible Platten (4) enthält, die Seite an Seite angeordnet zwischen dem Lager (1) und der genannten Trägerstruktur (3) befestigt sind und diese an den inneren und äusseren Kanten (5, 6) der genannten Platten (4) miteinander verbinden, wobei die Platten (4) starr wenigstens an ihren inneren Kanten (5) befestigt sind, so dass sie das Lager (1) starr in einer Richtung (7) radial zu der Welle (2) an der Trägerstruktur (3) halten und in einer Richtung (8) axial zu der Welle (2) nachgiebig sind, so dass das Lager (1) sich im Verhältnis zu der Trägerstruktur (3) in axialer Richtung frei bewegen kann, wobei das Lager (1) auf die Welle (2) mit Hilfe einer mit Gewinde versehenen Ringmutter (17) aufgezogen ist, wobei während der Befestigung, wenn die Platten (4) keiner axialen Belastung unterliegen, ein Spiel (G) zwischen dem inneren Ring (18) des Lagers (1) und einem Vorsprung (16) vorgesehen ist, der eine Schulter an der Welle (2) bildet, und nach der Befestigung, das heisst wenn die Ringmutter (17) auf einen Gewindezapfen (15) der Welle (2) aufgeschraubt worden ist, das genannte Spiel (G) durch die flexible Verformung der beiden Platten (4) ausgeglichen wird, mit einer daraus sich ergebenden axialen Vorbelastung des Lagers (1), die der notwendigen Kraft zur Verformung der Platten (4) entspricht.

2. Vorrichtung nach Patentanspruch 1, **dadurch gekennzeichnet, dass** sie eine erste Halterung (11) enthält, welche zwischen den Platten (4) angeordnet und an deren innere Kanten (5) angeschlossen ist.

3. Vorrichtung nach Patentanspruch 1, **dadurch gekennzeichnet, dass** sie eine zweite Halterung (12) für die Platten (4) enthält, welche an der Trägerstruktur (3) auf solche Weise angebracht werden kann, dass sie die Platten (4) mit deren äusseren Kanten (6) starr an der Trägerstruktur (3) befestigt.

4. Vorrichtung nach Patentanspruch 1, **dadurch gekennzeichnet, dass** die Platten (4) aus harmonischem Stahl hergestellt sind.

5. Vorrichtung nach Patentanspruch 1, **dadurch gekennzeichnet, dass** sie eine Anzahl von Platten (4) enthält, wobei die genannten Platten Seite an Seite angeordnet sind.

6. Vorrichtung nach Patentanspruch 3, **dadurch gekennzeichnet, dass** die genannte zweite Halterung (12) für die Platten (4) einzige Befestigungsmittel (13) zum Anbringen der genannten zweiten Halterung (12) an der Trägerstruktur (3) und zum Anbringen der Platten (4) an der zweiten Halterung (12) enthält.

7. Vorrichtung nach Patentanspruch 4, **dadurch gekennzeichnet, dass** die genannten Platten (4) symmetrisch sind.

8. Vorrichtung nach Patentanspruch 2, **dadurch gekennzeichnet, dass** das genannte Lager (1) von der genannten ersten Halterung (11) aufgenommen ist, wobei es koaxial und starr mit seinem äusseren Ring (19) an die genannte Halterung angeschlossen ist, wobei sich der genannte äussere Ring (19) mit einer Seite mit einem Rand (20) der ersten Halterung (11) im Kontakt befindet und mit der anderen Seite mit einer weiteren, mit Gewinde versehenen Ringmutter (21).

## Revendications

1. Une machine-outil comprenant un dispositif de support, un arbre rotatif (2), des paliers à contact de roulement (1) et une structure fixe de support (3), ledit dispositif de support comprenant au moins deux plaques (4) pouvant céder de manière élastique, mises côte à côte et montées entre ledit palier (1) et ladite structure de support (3), en accouplant ces derniers au niveau des bords intérieurs et extérieurs (5, 6) de ces mêmes plaques (4), lesdites plaques (4) étant fixées de manière rigide au moins au niveau de leurs bords intérieurs (5) pour supporter le palier (1) de manière rigide sur la structure de support (3) dans une direction (7) radiale à l'arbre (2) et de manière flexible dans une direction (8) axiale à l'arbre (2), de sorte que le palier (1) peut se déplacer librement dans la direction axiale par rapport à la structure de support (3), ledit palier (1) étant calé sur l'arbre (2) au moyen d'une bague-écrou filetée (17), **caractérisé en ce que**, durant le montage, quand les plaques (4) ne supportent aucune charge axiale, un jeu (G) est prévu entre la bague intérieure (18) du palier (1) et une saillie (16) formant un épaulement sur l'arbre (2) et **en ce que**, suite au serrage, c'est-à-dire quand la bague-écrou (17) a été vissée sur un pivot fileté (15) de l'arbre (2), ledit jeu (G) est compensé par la déformation élastique des deux plaques (4) avec une précharge axiale résultante sur le palier (1) égale à la force nécessaire pour la déformation de ces mêmes plaques (4).

2. Le dispositif selon la revendication 1, **caractérisé en ce qu'**il comprend un premier support (11) qui est placé entre les plaques (4) et accouplé au niveau de leurs bords intérieurs (5).

3. Le dispositif selon la revendication 1, **caractérisé en ce qu'**il comprend un deuxième support (12) pour les plaques (4), qui peut être associé à la structure de support (3) pour accoupler de manière rigide les plaques (4) à cette même structure de support (3) au niveau de leurs bords extérieurs (6).

4. Le dispositif selon la revendication 1, **caractérisé en ce que** lesdites plaques (4) sont réalisées en acier harmonique.

5. Le dispositif selon la revendication 1, **caractérisé en ce qu'**il comprend une pluralité de plaques (4), lesdites plaques étant placées côte à côte.

6. Le dispositif selon la revendication 3, **caractérisé en ce que** ledit deuxième support (12) pour les plaques (4) comprennent des moyens de serrage (13) uniques pour la fixation de ce même deuxième support (12) à la structure de support (3) et la fixation des plaques (4) au deuxième support (12).

7. Le dispositif selon la revendication 4, **caractérisé en ce que** lesdites plaques (4) sont symétriques.

8. Le dispositif selon la revendication 2, **caractérisé en ce que** ledit palier (1) est logé sur ledit premier support (11), étant coaxialement et rigidement accouplé au support au niveau de sa bague extérieure (19), ladite bague extérieure (19) étant en contact d'un côté avec un bord (20) du premier support (11) et de l'autre côté avec une autre bague-écrou filetée (21).
